# EUROPEAN PATENT APPLICATION

(11) **EP 2 383 677 A1**
(43) Date of publication of application: **02.11.2011**
(21) Application number: 10196363.5
(22) Date of filing: 21.12.2010
(51) Int. Cl.: G06K 7/10, G06K 7/12, G06K 19/06, G06K 9/74, H04L 9/32

(54) **Method and system for determining whether a to-be-identified individual is a registered individual**

(30) Priority: 23.04.2010 TW 099112865
(71) Applicant: Chung Shan Institute of Science and Technology, Armaments Bureau, M.N.D., Taoyuan County 32546 (TW)
(72) Inventor: Liao, Chih-Ming, Taoyuan County 32546 (TW); Chen, Chun-Hao, Taoyuan County 32546 (TW); Chiang, Ting-Wei, Taoyuan County 32546 (TW); Hwang, Yi-Yuh, Taoyuan County 32546 (TW); Ma, Shin-I, Taoyuan County 32546 (TW); Hwang, Chin-Der, Taoyuan County 32546 (TW); Huang, Wen-Cheng, Taoyuan County 32546 (TW); Wang, Mau-Ran, Taoyuan County 32546 (TW)
(74) Representative: Lang, Christian

(57) **Abstract**

A method for determining whether a to-be-identified individual is a registered individual includes the steps of: a) providing the registered individual with a non-biometric target, which is provided with a to-be-detected surface capable of scattering coherent light that is to be detected by an image sensor so as to obtain a speckle image unique to the non-biometric target, and storing reference speckle image information corresponding to the speckle image associated with the non-biometric target in a database; b) obtaining speckle image information associated with the to-be-identified individual; c) determining whether the speckle image information of the to-be-identified individual has a match with the reference speckle image information stored in the database; and d) determining the to-be-identified individual as the registered individual when it is determined in step c) that there is a match, and determining the to-be-identified individual as a non-registered individual when otherwise.

## Description

### CROSS-REFERENCE TO RELATED APPLICATION

This application claims priority of Taiwanese Application No. 099112865, filed on April 23, 2010.

### BACKGROUND OF THE INVENTION

### 1. Field of the Invention

The invention relates to an identification managing method and system, more particularly to a method and a system for determining whether a to-be-identified individual is a registered individual.

### 2. Description of the Related Art

Most access managing systems, security systems, and banking systems use magnetic card, IC card (contact IC card or non-contact IC card), or request an input of a key in order to confirm the identity of users and authorize access after the identity is confirmed. However, non-contact IC cards are relatively costly.

In addition, a lot of products are attached with destructible vinyl labels, laser security labels, or RFID tags to discourage or prevent counterfeit . However, these labels and tags may be forged.

### SUMMARY OF THE INVENTION

Therefore, the object of the present invention is to provide an identification method and system that can overcome the aforesaid drawbacks of the prior art.

According to one aspect of the present invention, there is provided a method for determining whether a to-be-identified individual is a registered individual that includes the steps of:
a) providing the registered individual with a non-biometric target, wherein the non-biometric target is provided with a to-be-detected surface capable of scattering coherent light that is to be detected by an image sensor so as to obtain a speckle image unique to the non-biometric target, and storing reference speckle image information corresponding to the speckle image associated with the non-biometric target in a database;
b) obtaining speckle image information associated with the to-be-identified individual;
c) determining whether the speckle image information of the to-be-identified individual has a match with the reference speckle image information stored in the database; and
d) determining the to-be-identified individual as the registered individual when it is determined in step c) that there is a match, and determining the to-be-identified individual as a non-registered individual when otherwise.

According to another aspect of the present invention, there is provided a method for determining whether a to-be-identified article is a registered article that includes the steps of:
a) storing reference speckle image information associated with the registered article in a database, wherein the registered article is provided with a to-be-detected surface capable of scattering coherent light that is to be detected by an image sensor so as to obtain a speckle image unique to the registered article, the reference speckle image information associated with the registered article corresponding to the speckle image;
b) obtaining speckle image information associated with the to-be-identified article;
c) determining whether the speckle image information of the to-be-identified article has a match with the reference speckle image information associated with the registered article and stored in the database; and
d) determining the to-be-identified article as the registered article when it is determined in step c) that there is a match, and determining the to-be-identified article as a non-registered article when otherwise.

According to yet another aspect of the present invention, there is provided a system for determining whether a to-be-identified individual is a registered individual that includes a non-biometric target, a database, a speckle image capturing device and a processor. The non-biometric target is provided to the registered individual. The database contains reference speckle image information corresponding to a speckle image associated with and unique to the non-biometric target. The speckle image capturing device includes a light-emitting module capable of emitting coherent light toward a to-be-detected surface, and an image sensor capable of detecting coherent light scattered from the to-be-detected surface so as to obtain a speckle image. The processor is connected to the speckle image capturing device, is capable of accessing the database, and is operable in an identification mode. In the identification mode, the processor controls the speckle image capturing device to obtain speckle image information associated with the to-be-identified individual, determines whether the speckle image information of the to-be-identified individual has a match with the reference speckle image information stored in the database, and determines the to-be-identified individual as the registered individual when it is determined that there is a match, and as a non-registered individual when otherwise.

### BRIEF DESCRIPTION OF THE DRAWINGS

Other features and advantages of the present invention will become apparent in the following detailed description of the preferred embodiments with reference to the accompanying drawings, of which:
Figure 1 is a schematic block diagram showing a system for determining whether a to-be-identified individual is a registered individual according to the first preferred embodiment of the present invention;
Figure 2 is a schematic diagram of a target input device according to the first preferred embodiment;
Figure 3 is a schematic diagram illustrating a housing of the system of the first preferred embodiment;
Figure 4A is a flow chart of a method for determining whether a to-be-identified individual is a registered individual according to the first preferred embodiment of the present invention;
Figure 4B is a flow chart of a method for determining whether a to-be-identified article is a registered article according to the second preferred embodiment of the present invention;
Figure 5A is a schematic diagram illustrating the non-biometric target mounted on a substrate and configured to serve as a bankcard together with the substrate;
Figure 5B is a schematic diagram illustrating a shielding member that protects a to-be-detected surface of the non-biometric target from scratching and dirt; and
Figure 6 is a schematic diagram illustrating the non-biometric target attached to an article and serving as an anti-counterfeit identification tag.

### DETAILED DESCRIPTION OF THE PREFERRED EMBODIMENTS

Before the present invention is described in greater detail, it should be noted that like elements are denoted by the same reference numerals throughout the disclosure.

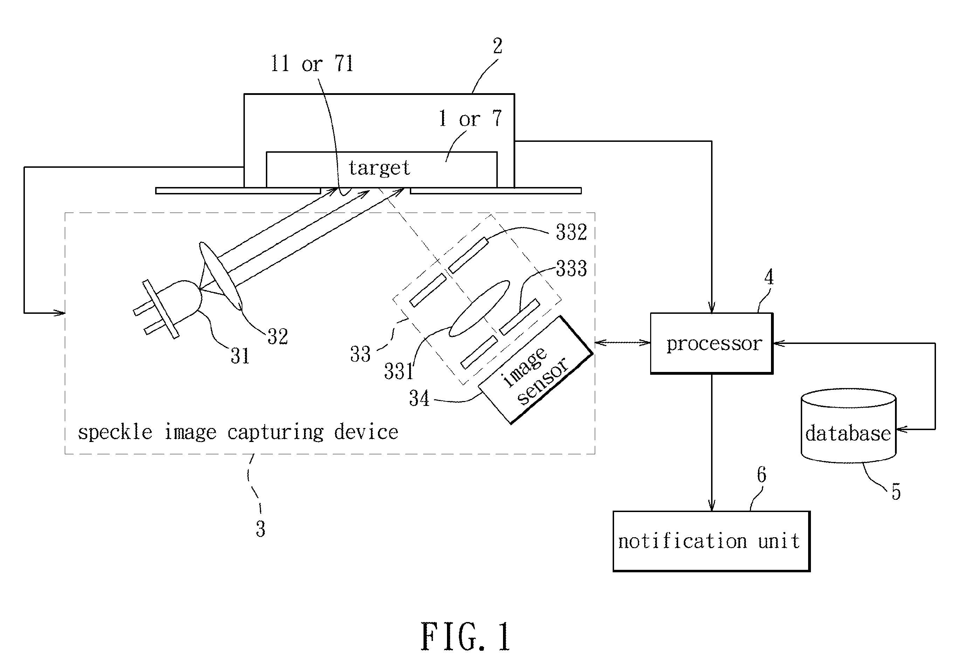

With reference to Figure 1, a system for determining whether a to-be-identified individual is a registered individual according to the first preferred embodiment of the present invention includes a non-biometric target 1, a target input device 2, a speckle image capturing device 3, a processor 4, a database 5, and a notification unit 6. The non-biometric target 1 is provided to the registered individual. As will be apparent in the following description, the registered individual may refer to a person or an article. The system is operable in two operational modes, one of which is a registration mode where reference speckle image information corresponding to a speckle image associated with and unique to the non-biometric target 1 is obtained and stored in the database 5, and the other one of which is an identification mode where speckle image information associated with the to-be-identified individual is obtained and compared with the reference speckle image information stored in the database 5 so as to determine whether the to-be-identified individual is the registered individual or not.

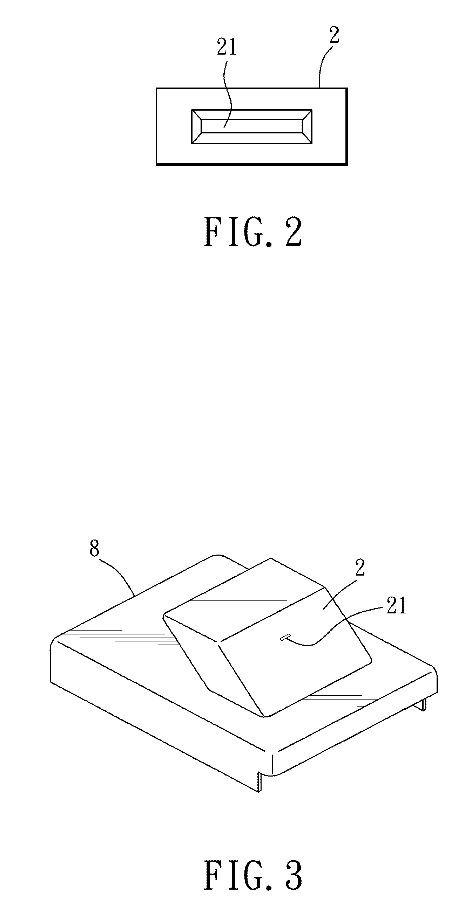

With further reference to Figure 2, the target input device 2 includes a target positioning unit 21 and a target detector (not shown). The target positioning unit 21 aids in positioning a to-be-registered target 1 (i.e., the non-biometric target 1 provided to the registered individual during the registration mode) or a to-be-identified target 7 associated with the to-be-identified individual (i.e., a target that is provided by the to-be-identified individual for identification during the identification mode) at a specific position relative to the speckle image capturing device 3. The target detector is capable of detecting the presence of the to-be-registered target 1 or the to-be-identified target 7 at the specific position in the target input device 2, and outputs a trigger signal to the processor 4 so as to inform the processor 4 of presence of the same. In this embodiment, the target positioning unit 21 is in the form of a guiding slot It should be noted herein that the target positioning unit 21 may also be in the form of a clamping member, as long as it is capable of ensuring that the to-be-registered target 1 or the to-be-identified target 7 can be guided to and held at the specific position relative to the speckle image capturing device 3 without damaging the surface of the to-be-registered target 1 or the to-be-identified target 7.

The speckle image capturing device 3 includes a light-emitting module 31, a first lens 32, a light restricting module 33, and an image sensor 34. The light-emitting module 31 is capable of emitting highly coherent light toward a to-be-detected surface 11, 71 of the to-be-registered target 1 or the to-be-identified target 7 through the first lens 32. The image sensor 34 is capable of detecting light scattered from the to-be-detected surface 11, 71 and propagating through the light restricting module 33 so as to obtain a speckle image. The light restricting module 33 includes a second lens 331, and front and rear apertures 332, 333 respectively disposed proximate to front and rear sides of the second lens 331 as defined by an optical path direction of the light. The rear aperture 333 is for diffracting the light scattered from the to-be-detected surface 11, 71 and creating an interference effect. Further details of the speckle image capturing device 3 of this embodiment may be found in U.S. Patent Application Publication No. 2007/0139659. However, it should be noted herein that implementation of the speckle image capturing device 3 is not limited to that disclosed herein or in U.S. Patent Application No. 2007/0139659.

The processor 4 is connected to the speckle image capturing device 3, is capable of accessing the database 5, and is operable in a registration mode and an identification mode.

In the registration mode, the processor 4 controls the speckle image capturing device 3 to obtain a speckle image of the to-be-detected surface 11 of the non-biometric target 1 associated with the registered individual upon receipt of the trigger signal from the target detector (not shown) informing the presence of the non-biometric target 1 at the specific position in the target input device 2, and stores the reference speckle image information corresponding to the speckle image thus obtained by the speckle image capturing device 3 in the database 5. Optionally, other data related to the registered individual may also be inputted into the database 5 during registration. Examples of the data include an ID number that is assigned to the registered individual, a photo of the registered individual if the registered individual is a person, a property serial number in the case where the registered individual is anarticle,etc. Multiple individuals maybe registered into the system in this manner by repeating the speckle image capturing and storing, and data inputting steps.

After at least one entry of reference speckle image information is established in the database 5, the processor 4 may be operated in the identification mode. For simplicity of illustration, it is assumed hereinafter that only one individual is registered in the system such that there is only one entry of reference speckle image information in the database 5. In the identification mode, the processor 4 controls the speckle image capturing device 3 to obtain speckle image information associated with the to-be-identified individual upon receipt of the trigger signal informing the presence of the to-be-identified target 7 at the specific position in the target input device 2, determines whether the speckle image information associated with the to-be-identified individual has a match with the reference speckle image information stored in the database 5, and further determines the to-be-identified individual as the registered individual when it is determined that there is a match, and as a non-registered individual when otherwise.

In this embodiment, the manner in which the processor 4 determines whether there is a match is through correlation-based template matching, such as using cross correlation (CC) or normalized cross correlation (NCC). In particular, the processor 4 first determines whether a correlation coefficient between the speckle image information of the to-be-identified individual and the reference speckle image information stored in the database 5 exceeds a predetermined threshold value, and then determines that there is a match when the correlation coefficient exceeds the predetermined threshold value, and that there is no match when otherwise.

In one implementation, the processor 4 is further operable to extract at least one feature of the speckle image associated with the to-be-identified individual for performing image matching with the reference speckle image information stored in the database 5. The feature may be an edge, a corner, or a scale invariant feature transform (SIFT) point of the speckle image. The reference speckle image information stored in the database 5 may represent the speckle image associated with the non-biometric target 1, or may in the alternative represent at least one feature of the speckle image associated with the non-biometric target 1. The process of feature matching may involve performing a similarity check between feature points (e.g., by utilizing Euclidian distance), or may involve the use of correlation coefficients as described hereinabove.

The notification unit 6 is connected to the processor 4 for generating a notification as to result of whether the to-be-identified individual is the registered individual as determined by the processor 4. The notification unit 6 may include a display screen for visually displaying the result, and/or a speaker for audibly outputting the result, and/or a light indicator for notifying the result through blinking of light.

Alternatively, the system may further include an authorization control unit (not shown) that is connected to the processor 4 for executing an operation in accordance with the result of whether the to-be-identified individual is the registered individual as determined by the processor 4. An exemplary implementation of the system that includes the authorization control unit may be a door security system, where the authorization control unit unlocks an automatic door when the to-be-identified individual is determined to be the registered individual by the processor 4, and keeps the automatic door locked when otherwise. It should be noted herein that the notification unit 6 is optional when the system includes the authorization control unit.

It should be noted herein that even if all the non-biometric targets 1 that are respectively assigned to multiple registered individuals are manufactured using the same process with the same material by the same equipment, due to natural limitations in physical properties, there will never be identical to-be-detected surfaces 11 among these non-biometric targets 1 in terms of the speckle images obtained therefrom. In other words, every single one of the non-biometric targets 1 is unique and cannot be duplicated. In order to protect the to-be-detected surface 11 of the non-biometric target 1 from scratching so as to ensure that the speckle image associated therewith doe not change, it is preferable for the non-biometric target 1 to be made from an anti-abrasion material, or for the to-be-detected surface 11 to be one coated with a diamond-like thin film. Moreover, since the to-be-detected surface 11 has to be capable of scattering light, it is preferable for the to-be-detected surface 11 to be non-transparent and non-mirror-like. However, it should be noted herein that a translucent to-be-detected surface 11 may also work in other embodiments of the present invention.

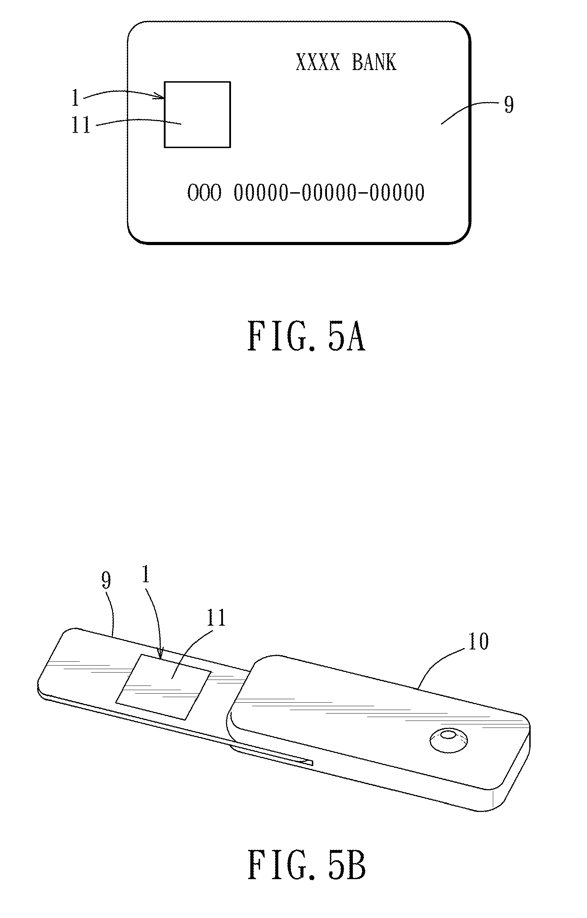

Due to the uniqueness of the to-be-detected surface 11, the non-biometric target 1 may be used for security and identification purposes. In particular, the non-biometric target 1 may be mounted on one side of a substrate, such as a card body 9 shown in Figure 5A, and configured to serve as one of an identification card, a bankcard, and a credit card together with the substrate. In the implementation shown in Figure 5B, the system further includes a shielding member 10 that protects the to-be-detected surface 11 of the non-biometric target 1 from scratching and dirt. The non-biometric target 1 is mounted movably to the shielding member 10 so as to be exposed from the shielding member 10 during use, and be concealed in the shielding member 10 during storage.

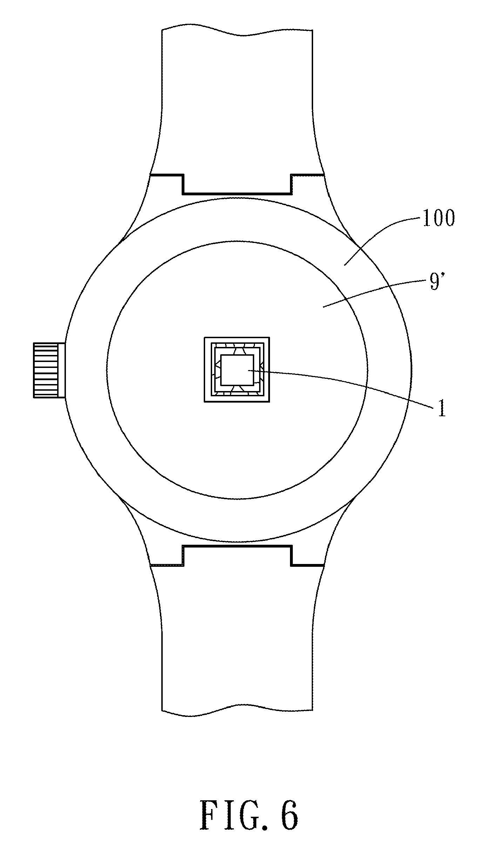

Alternatively, as shown in Figure 6, the substrate may also be a paper sheet or an adhesive label 9' such that when the registered individual is an article, such as a watch 100 or other valuable objects, the non-biometric target 1 may be attached to the article and serve as an anti-counterfeit identification tag of the article. Moreover, since valuable objects are normally preserved with care and protection, a portion of the article may itself serve as the non-biometric target 1 with its surface serving as the to-be-detected surface 11 in other embodiments of the present invention.

As shown in Figure 3, the system further includes a housing unit 8 for enclosing the target input device 2, the speckle image capturing device 3, the processor 4, and the database 5.

The present invention may be used in standalone applications as described above (e.g., a security entrance system involving one automatic door), and may also be used in circuit-based applications as will be described hereinbelow.

In the event that the present invention is applied to a security system involving multiple automatic doors to a particular building, the system of this invention would include a single processor 4, a single database 5, a single authorization control unit (not shown), and multiple sets of the target input devices 2 and the speckle image capturing devices 3, each set being disposed adjacent to a corresponding automatic door, and being connected to the processor 4 over a wired cable, wirelessly, or over a network.

When a person (i.e., a to-be-identified individual) wishes to enter the building through a particular automatic door and puts a to-be-identified target 7 (shown in Figure 1) into the corresponding target input device 2, a trigger signal is transmitted to the corresponding speckle image capturing device 3 for enabling the same to obtain the speckle image information associated with the to-be-identified target 7. The speckle image information is subsequently transmitted to the processor 4 that may be disposed remotely from this particular automatic door, and the processor 4 then performs the determination of whether the to-be-identified target 7 corresponds to the registered individual with reference to the reference speckle image information stored in the database 5. When the person is determined to be registered in the system, the authorization control unit unlocks this particular automatic door so as to permit the registered person to pass therethrough, and keeps the automatic door locked when otherwise so as to deny entry of the person into the building. Optionally, a notification may be generated as to result of the determination, indicating grant/deny of entry. The notification may also contain other information associated with the registered individual, such as name, ID number, photo of the registered individual, etc., as extracted from the database 5.

Furthermore, in the event that the present invention is applied to a banking system, there may be one system that is dedicated for performing registration and that is located inside a particular branch office, and another system (or multiple other systems) that is dedicated for performing identification and that is incorporated into an ATM machine. In this case, only the system for performing registration includes the database 5, while the system for performing identification is capable of accessing the database 5 over a wired cable, wirelessly, or over a network. In addition, the determination of whether the to-be-identified individual is the registered individual may be performed by the processor 4 of the system for performing identification, or may be performed by the processor 4 of the system for performing registration, depending on the design choice. In this kind of applications, registration is performed in a first location, and identification is performed in a second location different from the first location.

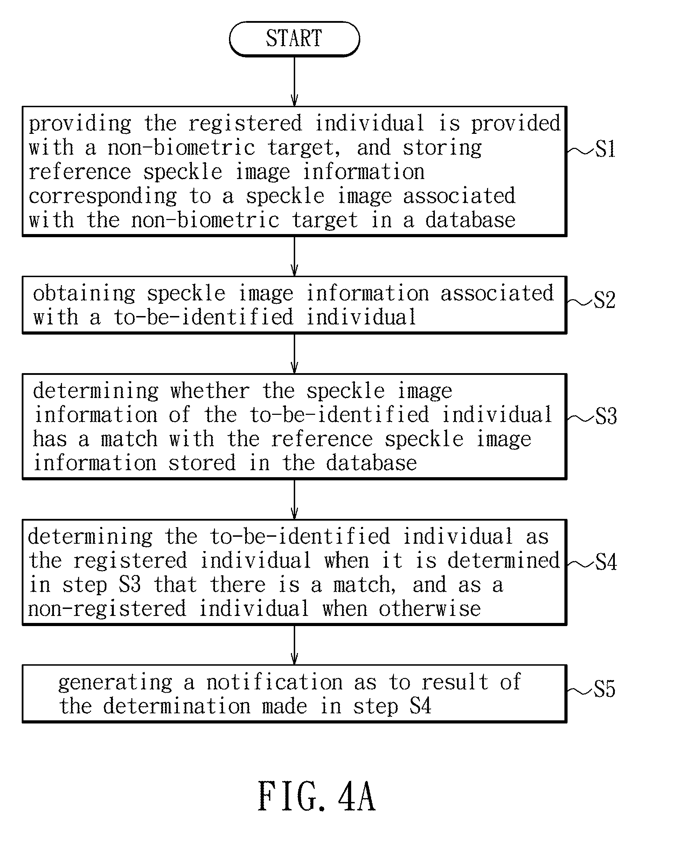

With reference to Figure 4A, the method for determining whether a to-be-identified individual is a registered individual according to the first preferred embodiment of the present invention includes the following steps.

In step S1, the registered individual is provided with a non-biometric target 1, wherein the non-biometric target 1 is provided with a to-be-detected surface 11 capable of scattering coherent light that is to be detected by an image sensor 34 so as to obtain a speckle image unique to the non-biometric target 1, and reference speckle image information corresponding to the speckle image associated with the non-biometric target 1 is stored in a database 5.

In step S2, speckle image information associated with the to-be-identified individual is obtained.

In step S3, it is determined whether the speckle image information of the to-be-identified individual has a match with the reference speckle image information stored in the database 5.

In step S4, the to-be-identified individual is determined as the registered individual when it is determined in step S3 that there is a match, and the to-be-identified individual is determined as a non-registered individual when otherwise.

In step S5, a notification is generated as to result of the determination made in step S4. Alternatively, or additionally, an operation corresponding to the result of the determination made in step S4 is executed in step S5.

In one implementation of this invention, in step S1, the reference speckle image information stored in the database 5 represents at least one feature of the speckle image associated with the non-biometric target 1, and in step S2, the speckle image information represents at least one feature of a speckle image associated with the to-be-identified individual.

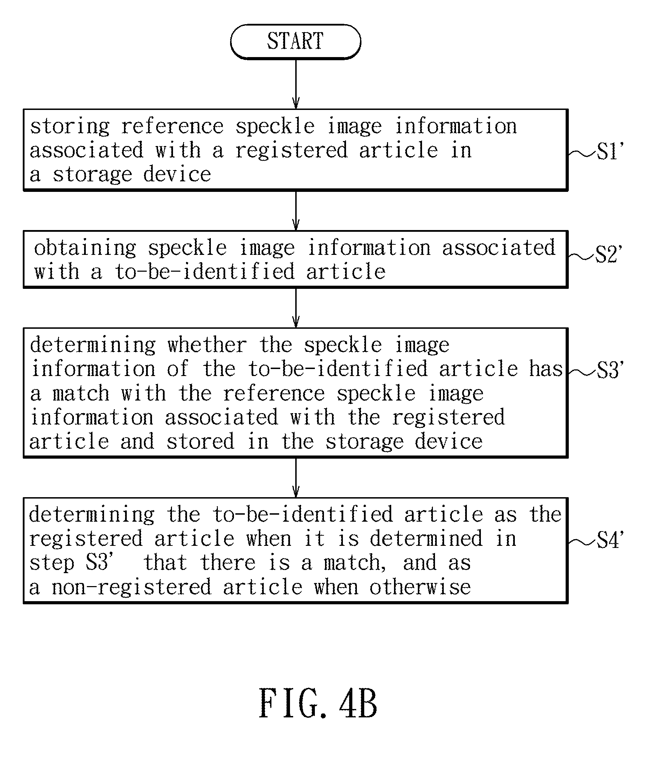

With reference to Figure 4B, the method for determining whether a to-be-identified article is a registered article according to the second preferred embodiment of this invention includes the following steps.

In step S1', reference speckle image information associated with the registered article is stored in a database 5 (shown in Figure 1), wherein the registered article is provided with a to-be-detected surface capable of scattering coherent light that is to be detected by an image sensor 34 so as to obtain a speckle image unique to the registered article. The reference speckle image information associated with the registered article corresponds to the speckle image.

In step S2', speckle image information associated with the to-be-identified article is obtained.

In step S3', it is determined whether the speckle image information of the to-be-identified article has a match with the reference speckle image information associated with the registered article and stored in the database 5.

In step S4', the to-be-identified article is determined as the registered article when it is determined in step S3' that there is a match, and the to-be-identified article is determined as a non-registered article when otherwise.

The second preferred embodiment may be implemented as an inventory registration system. However, the system infrastructure is not different from that disclosed in the first preferred embodiment.

In summary, the present invention has the following advantages and effects:
1. Due to natural limitations in physical properties, there will never be two items that can generate identical speckle images even if the items are manufactured using the same process with the same material by the same equipment. Therefore, the to-be-detected surface 11 of each non-biometric target 1 is unique and cannot be duplicated. Due to the uniqueness of the to-be-detected surface 11, the non-biometric target 1 may be used for security management and identification purposes.
2. The non-biometric target 1 is preferably made from an anti-abrasion material, and the to-be-detected surface 11 is preferably one coated with a diamond-like thin film such that the to-be-detected surface 11 of the non-biometric target 1 can be prevented from scratching and damage so as to ensure that the speckle image associated therewith does not change.
3. When the non-biometric target 1 is attached to an article, it can serve as a unique anti-counterfeit identification tag, such that forgery of the article can be prevented.

While the present invention has been described in connection with what are considered the most practical and preferred embodiments, it is understood that this invention is not limited to the disclosed embodiments but is intended to cover various arrangements included within the spirit and scope of the broadest interpretation so as to encompass all such modifications and equivalent arrangements.

## Claims

1. A method for determining whether a to-be-identified individual is a registered individual, comprising the steps of:
a) providing the registered individual with a non-biometric target, wherein the non-biometric target is provided with a to-be-detected surface capable of scattering coherent light that is to be detected by an image sensor so as to obtain a speckle image unique to the non-biometric target, and storing reference speckle image information corresponding to the speckle image associated with the non-biometric target in a database;
b) obtaining speckle image information associated with the to-be-identified individual;
c) determining whether the speckle image information of the to-be-identified individual has a match with the reference speckle image information stored in the database; and
d) determining the to-be-identified individual as the registered individual when it is determined in step c) that there is a match, and determining the to-be-identified individual as a non-registered individual when otherwise.

2. The method as claimed in Claim 1, wherein:
in step a), the reference speckle image information stored in the database represents at least one feature of the speckle image associated with the non-biometric target; and
in step b), the speckle image information represents at least one feature of a speckle image associated with the to-be-identified individual.

3. The method as claimed in Claim 1, further comprising the step of generating a notification as to result of the determination made in step d).

4. The method as claimed in Claim 1, further comprising the step of executing an operation in accordance with result of the determination made in step d).

5. The method as claimed in Claim 1, wherein the to-be-detected surface of the non-biometric target is one coated with a diamond-like thin film.

6. The method as claimed in Claim 1, wherein in step a), the non-biometric target is mounted on one side of a substrate.

7. The method as claimed in Claim 6, wherein the substrate is a card body, and an assembly of the substrate and the non-biometric target is configured to serve as one of an identification card, a bankcard and a credit card.

8. A method for determining whether a to-be-identified article is a registered article, comprising the steps of:
a) storing reference speckle image information associated with the registered article in a database, wherein the registered article is provided with a to-be-detected surface capable of scattering coherent light that is to be detected by an image sensor so as to obtain a speckle image unique to the registered article, the reference speckle image information associated with the registered article corresponding to the speckle image;
b) obtaining speckle image information associated with the to-be-identified article;
c) determining whether the speckle image information of the to-be-identified article has a match with the reference speckle image information associated with the registered article and stored in the database; and
d) determining the to-be-identified article as the registered article when it is determined in step c) that there is a match, and determining the to-be-identified article as a non-registered article when otherwise.

9. A system for determining whether a to-be-identified individual is a registered individual, comprising:
a non-biometric target that is provided to the registered individual;
a database containing reference speckle image information corresponding to a speckle image associated with and unique to the non-biometric target;
a speckle image capturing device including a light-emitting module capable of emitting coherent light toward a to-be-detected surface, and an image sensor capable of detecting light scattered from the to-be-detected surface so as to obtain a speckle image; and
a processor connected to said speckle image capturing device, capable of accessing said database, and operable in an identification mode, where said processor controls said speckle image capturing device to obtain speckle image information associated with the to-be-identified individual, determines whether the speckle image information of the to-be-identified individual has a match with the reference speckle image information stored in said database, and determines the to-be-identified individual as the registered individual when it is determined that there is a match, and as a non-registered individual when otherwise.

10. The system as claimed in Claim 9, wherein connection between said speckle image capturing device and said processor is established by one of a wired cable, a network, and a wireless connection.

11. The system as claimed in Claim 9, wherein said processor is further operable in a registration mode, where said processor controls said speckle image capturing device to obtain a speckle image of a to-be-detected surface of the non-biometric target of the registered individual, and stores the reference speckle image information corresponding to the speckle image thus obtained by said speckle image capturing device in said database.

12. The system as claimed in Claim 11, wherein the to-be-detected surface of the non-biometric target is one coated with a diamond-like thin film.

13. The system as claimed in Claim 9, wherein said processor is further operable to extract at least one feature of the speckle image associated with the to-be-identified individual, the reference speckle image information stored in said database representing at least one feature of the speckle image associated with the non-biometric target.

14. The system as claimed in Claim 9, further comprising a notification unit connected to said processor for generating a notification as to result of whether the to-be-identified individual is the registered individual as determined by said processor.

15. The system as claimed in Claim 9, further comprising an authorization control unit connected to said processor for executing an operation in accordance with result of whether the to-be-identified individual is the registered individual as determined by said processor.
